# EUROPÄISCHE PATENTSCHRIFT

(11) **EP 0 696 833 B1**
(45) Veröffentlichungstag und Bekanntmachung des Hinweises auf die Patenterteilung: **08.04.1998**
(21) Anmeldenummer: 94112365.5
(22) Anmeldetag: 08.08.1994
(51) Int. Cl.: H02K 5/24, H02K 5/00

(54) **Geräuschdämpfende Motorbefestigung, insbesondere für elektrische Stellantriebe in Kraftfahrzeugen**
Noise damping mounting of a motor particularly of electrical positioners for vehicles
Dispositif de fixation insonorisant pour moteur notamment pour positionneurs électriques de véhicules

(43) Veröffentlichungstag der Anmeldung: 14.02.1996
(73) Patentinhaber: SIEMENS AKTIENGESELLSCHAFT, 80333 München (DE)
(72) Erfinder: Tiemeyer, Peter, Dipl.-Ing., D-97074 Würzburg (DE)

(56) Entgegenhaltungen:
- EP-A- 0 550 706
- DE-A- 4 306 588
- DE-U- 9 108 745
- FR-A- 2 408 938

## Beschreibung

Die Erfindung bezieht sich auf eine geräuschdämpfende Befestigung, insbesondere für elektrische Stellantriebe in Kraftfahrzeugen, gemäß Anspruch 1.

Insbesondere an die Stellantriebe in Kraftfahrzeugen werden hohe Anforderungen hinsichtlich Geräuscharmut gestellt; bei einem für solche Nebenantriebe üblicherweise vorgesehenen permanentmagnetisch erregten Gleichstrommotor werden Geräusche insbesondere durch Schwingungen und Vibrationen des Motors bzw. einzelner Motorteile aufgrund von Drehmomentenschwankungen durch die Kommutierung bzw. Leitwertschwankungen durch die Läufernutung als auch durch entsprechende Anregung der Bürstensysteme aufgrund der Kommutatorschlitzung erzeugt. Bei nicht hinreichender Geräuschdämpfung besteht Gefahr, daß derartige Vibrationen bei der Ankopplung des Motors an sie haltende Karosserieteile verstärkt und als Luftschall abgestrahlt werden.

Es ist bekannt (DE-AS 1 268 797), zur Schall-Vibrationsdämpfung bei einer in einem umgebenden zylindrischen Gehäuse anzuordnenden Motorgebläseeinheit, z.B. eines Ventilators in einem Staubsauger, einen sich zwischen dem umgebenden Gehäuse und der Motorgebläseeinheit abstützenden rohrförmigen Ring aus elastischem Material anzuordnen, der gegen die eine zylindrische Fläche anliegt und eine Anzahl sich radial zu der zylindrischen Gegenfläche hin erstreckende Ansätze aufweist und dabei zwischen dem Außenumfang des Motors und dem umgebenden zylindrischen Gehäuse unter radialer Vorspannung eingedrückt ist; derartige geräuschdämpfende Motorbefestigungen eignen sich nicht für eine an sich wünschenswerte weiche Entkopplung und sind aufgrund ihrer schwierigen Montage nicht für eine Automatenfertigung geeignet.

Durch die DE-U-91 08 745 ist ein Elektromotor bekannt, dessen Stator innerhalb eines umfassenden Motorgehäuses durch einen zwischenliegenden Haltekörper geräuschentkoppelt festgehalten ist, der einen radial außen im Motorgehäuse arretierten Ringteil aufweist, der radial innen den Stator spiellos umgreift.

Der Erfindung liegt daher die Aufgabe zugrunde, eine fertigungs- und montagetechnisch einfache geräuschdämpfende Motorbefestigung zu erzielen, die eine weiche Entkopplung und damit eine Dämpfung auch kleiner Resonanzfrequenzen gewährleisten kann.

Die Lösung dieser Aufgabe gelingt durch die Lehre des Anspruchs 1; vorteilhafte Ausgestaltungen der Erfindung sind jeweils Gegenstand der Unteransprüche.

Durch die nur auf Zug belastete Dämpfungszwischenlage entfallen auf Druck vorgespannte und damit eine gewisse Mindeststeifigkeit erfordernde Entkopplungselemente und sind der Motor in dem Halterungsteil und das Halterungsteil am Befestigungsteil in einfacher axialer Steckmontage gegenseitig montierbar.

Der Fertigungs- und Montageaufwand läßt sich dadurch weiter minimieren, daß nach einer ersten Ausgestaltung der Erfindung der Halterungsteil hülsenförmig im Sinne einer axialen Einsteckaufnahme des Motors ausgebildet und, insbesondere bei waagrechter Einbaulage, nur in seinem oberen Teil in radialem Abstand von einem schalenförmig ausgebildeten Befestigungsteil übergriffen wird, wobei zweckmäßigerweise der Halterungsteil und/oder der Befestigungsteil als Kunststoffteile, insbesondere als Kunststoff-Spritzgußteile, ausgebildet und die Dämpfungszwischenlage aus thermoplastischem Elastomer an den Halterungsteil und/oder den Befestigungsteil angespritzt sind. Bei senkrechter Einbaulage sind zweckmäßigerweise ein hülsenförmiger Befestigungsteil und eine sich über den gesamten Umfang verteilende Dämpfungszwischenlage vorgesehen. Als alleinige oder zusätzliche Befestigungsverbindung zwischen dem Halterungsteil bzw. Befestigungsteil einerseits und der Dämpfungszwischenlage andererseits können in vorteilhafter Weise auch Verrastungen, insbesondere Verknöpfungen, vorgesehen werden.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; diese zeigt in einer perspektivischen Darstellung eine geräuschdämpfende Motorbefestigung in waagrechter Einbaulage mit einem schalenförmigen Befestigungsteil, an dem ein einen axial eingesteckten Elektromotor aufnehmender Halterungsteil über Dämpfungsstege befestigt ist.

Die Figur zeigt einen in automatengerechter axialer Montagestecktechnik in einen hülsenförmigen Halterungsteil 2 eingesteckten Elektromotor mit einem Motorgehäuse 1 und mit einer stirnseitig herausragenden Rotorachse 1.1, auf der z.B. das Lüfterrad eines Kraftfahrzeug-Lüfters befestigt sein kann. Nach dem Einstecken des Motorgehäuses 1 in den hülsenförmigen Halterungsteil 2 erfolgt eine axiale Lagefixierung relativ zu dem Halterungsteil 2 bei der weiteren Motormontage dadurch, daß an dem Motorgehäuse 1 stirnseitig fixierte Lagerbügel 8 mit radial überstehender Nase 8.1 axial vor der Stirnseite des Halterungsteils 2 liegen.

Zur Befestigung eines derartigen Lüfters in einem Kraftfahrzeug-Karosserieteil oder Kraftfahrzeug-Lüftergehäuse ist der Halterungsteil 2 in seiner oberen Hälfte in radialem Abstand von einem der Krümmung des Halterungsteils 2 angepaßten zweckmäßigerweise gitterförmigen Befestigungsteil übergriffen. Der Befestigungsteil 3 ist mit dem Halterungsteil 2 über Dämpfungsstege 4-7 verbunden, die im gegenseitigen tangentialen Abstand im wesentlichen stegartig axial verlaufen und insbesondere bei zweckmäßiger Herstellung des Halterungsteils 2 und des Befestigungsteils 3 als Kunststoffspritzgußteile zumindest an einen der vorgenannten Teile angespritzt sind.

Zur Gewährleistung einer guten Lüftung des Elektromotors und zur Kosten- sowie Gewichtsersparnis ist nach einer Ausgestaltung der Erfindung der Befestigungsteil 3 rippenartig mit axial verlaufenden Längsrippen 3.4, an denen die Dämpfungsstege 4-7 anliegen, sowie mit tangential verlaufenden Querrippen 3.5 versehen und besitzt seitliche, vorzugsweise einstückig mitangespritzte, Befestigungsaufnahmen 3.1;3.2, mit denen die gesamte Gebläseeinheit in einem Lüftergehäuse bzw. in einem Karosserieteil befestigbar, z.B. festschraubbar, ist.

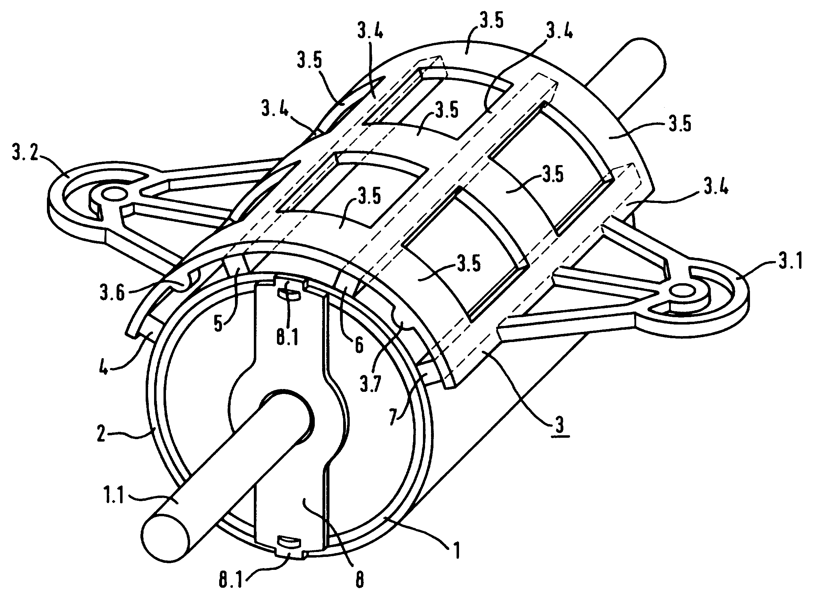

Zum Schutz gegen zu starke Auslenkungen des Halterungsteils 2 relativ zum übergreifenden Befestigungsteil 3 und damit zur Verhinderung eines Anschlagens bzw. Schleifens des auf der Rotorachse 1.1 befestigten Lüfterrades, z.B. in einem umgebenden Lüftergehäuse, sind entweder an dem Halterungsteil 2 oder - wie in FIG 1 angedeutet - an dem Befestigungsteil 3, vorzugsweise einstückig, Anschlagbegrenzungen 3.6;3.7, insbesondere in axialen Endbereichen des Befestigungsteils, vorgesehen.

## Patentansprüche

1. Geräuschdämpfende Motorbefestigung, insbesondere für elektrische Stellantriebe in Kraftfahrzeugen mit folgenden Merkmalen:
a) Das Motorgehäuse (1) des Motors wird von einem umgreifenden Halterungsteil (2) aufgenommen;
b) der Halterungsteil (2) ist in radialem Abstand, zumindest bereichsweise, von einem Befestigungsteil (3) übergriffen;
c) der Befestigungsteil (3) ist mit dem Halterungsteil (2) über elastische, im wesentlichen dabei nur auf Zug belastete, Dämpfungszwischenlagen (4-7) verbunden.

2. Geräuschdämpfende Motorbefestigung nach Anspruch 1 mit dem Merkmal:
d) Der Halterungsteil (2) ist hülsenförmig im Sinne einer axialen Einsteckaufnahme des Motors (1) ausgebildet.

3. Gerauschdämpfende Motorbefestigung nach Anspruch 1 und/oder 2 mit dem Merkmal:
e) Der Halterungsteil (2) wird, insbesondere bei waagrechter Einbaulage, in seinem oberen Teil in radialem Abstand von dem schalenförmig ausgebildeten Befestigungsteil (3) übergriffen.

4. Geräuschdämpfende Motorbefestigung nach zumindest einem der Ansprüche 1-3 mit dem Merkmal:
f) Der Halterungsteil (2) und/oder der Befestigungsteil (3) sind als Kunststoffteile, insbesondere als Kunststoff-Spritzgußteile, ausgebildet.

5. Geräuschdämpfende Motorbefestigung nach zumindest einem der Ansprüche 1-4 mit dem Merkmal:
g) Die Dämpfungszwischenlage (4-7) besteht aus einem thermoplastischen Elastomer.

6. Geräuschdämpfende Motorbefestigung nach Anspruch 4 bzw.5 mit dem Merkmal:
h) Die Dämpfungszwischenlage (4-7) ist an den Halterungsteil (2) und/oder an den Befestigungsteil (3) angespritzt.

7. Geräuschdämpfende Motorbefestigung nach zumindest einem der Ansprüche 1-6 mit dem Merkmal:
i) Die Dämpfungszwischenlage besteht aus, vorzugsweise mit gegenseitigem tangentialen Abstand insbesondere axial verlaufenden Dämpfungsstegen (4-7).

8. Geräuschdämpfende Motorbefestigung nach zumindest einem der Ansprüche 1-7 mit dem Merkmal:
j) Der Halterungsteil (2) und/oder der Befestigungsteil (3) ist mit, insbesondere einstückig angeformten, radialen Anschlagbegrenzungen (3.6;3.7) versehen.

9. Geräuschdämpfende Motorbefestigung nach zumindest einem der Ansprüche 1-8 mit dem Merkmal:
k) Der Befestigungsteil (3) ist mit, insbesondere einstückig angeformten, Befestigungsaufnahmen (3.1;3.2), insbesondere in Form von Schraubverbindungen, für eine äußere Halterung, insbesondere an einem Kraftfahrzeugteil, versehen.

10. Geräuschdämpfende Motorbefestigung nach zumindest einem der Ansprüche 1-6 mit dem Merkmal:
e) Der Befestigungsteil (3) ist in Gitterstruktur (3.4;3.5) ausgebildet.

## Claims

1. Noise-damping motor fastening, in particular for electric actuators in motor vehicles, having the following features:
a) The motor housing (1) of the motor is accommodated by a holding part (2) engaging around it;
b) the fastening part (3) engages at a radial distance over the holding part (2), at least in some regions;
c) the fastening part (3) is connected to the holding part (2) via resilient, damping intermediate layers (4 - 7) that are essentially loaded only in tension.

2. Noise-damping motor fastening according to Claim 1, having the feature:
d) the holding part (2) is constructed in a sleeve shape with the effect of the motor (1) being accommodated by being pushed in axially.

3. Noise-damping motor fastening according to Claim 1 and/or 2, having the feature:
e) in particular in the case of a horizontal installation position, the fastening part (3), which is of shell-like construction, engages at a radial distance over the holding part (2), in the upper part of the latter.

4. Noise-damping motor fastening according to at least one of Claims 1 - 3, having the feature:
f) the holding part (2) and/or the fastening part (3) is/are constructed as plastic parts, in particular as plastic injection mouldings.

5. Noise-damping motor fastening according to at least one of Claims 1 - 4, having the feature:
g) the damping intermediate layer (4 - 7) consists of a thermoplastic elastomer.

6. Noise-damping motor fastening according to Claim 4 or 5, having the feature:
h) the damping intermediate layer (4-7) is injection moulded onto the holding part (2) and/or onto the fastening part (3).

7. Noise-damping motor fastening according to at least one of Claims 1 - 6, having the feature:
i) The damping intermediate layer comprises damping webs (4 - 7) that preferably run, in particular axially, with a mutual tangential spacing.

8. Noise-damping motor fastening according to at least one of Claims 1 - 7, having the features:
j) the holding part (2) and/or the fastening part (3) is/are provided with radial delimiting stops (3.6; 3.7), that are in particular moulded on in one piece.

9. Noise-damping motor fastening according to at least one of Claims 1 - 8, having the feature:
k) the fastening part (3) is provided with fastening receptacles (3.1; 3.2) that are in particular moulded on in one piece, in particular in the form of screw connections, to be held externally, in particular on a motor vehicle part.

10. Noise-damping motor fastening according to at least one of Claims 1 - 6, having the feature:
1) the fastening part (3) is constructed in a grid structure (3.4; 3.5).

## Revendications

1. Dispositif de fixation insonorisant pour moteur notamment pour actionneurs de véhicule automobile, ayant les caractéristiques suivantes :
a) le carter (1) du moteur est reçu par une pièce (2) de maintien qui l'entoure
b) la pièce (2) de maintien est chevauchée à distance radiale au moins par endroit par une pièce (3) de fixation ;
c) la pièce (3) de fixation est reliée à la pièce (2) de maintien par des intercalations (4 à 7) d'amortissement élastique chargé sensiblement en l'occurrence seulement à la traction

2. Dispositif de fixation insonorisant pour moteur suivant la revendication 1, ayant la caractéristique :
d) la pièce (2) de maintien est en forme de douille en vue de recevoir le moteur (1) par enfilage axial

3. Dispositif de fixation insonorisant pour moteur suivant la revendication 1 et/ou 2 ayant la caractéristique :
e) la pièce (2) de maintien est notamment pour une position horizontale, chevauchée dans sa partie supérieure à distance radiale par la pièce (3) de fixation constituée sous la forme d'une coquille

4. Dispositif de fixation insonorisant pour moteur suivant la revendication 1 à 3 ayant la caractéristique :
f) la pièce (2) de maintien et/ou la pièce (3) de fixation sont des pièces en matière plastique notamment des pièces en matière plastique moulées par injection.

5. Dispositif de fixation insonorisant pour moteur suivant l'une des revendications 1 à 4 ayant la caractéristique :
g) les intercalations (4 à 7) d'amortissement sont en élastomère thermoplastique.

6. Dispositif de fixation insonorisant pour moteur suivant la revendication 4 ou 5 ayant la caractéristique :
h) l'intercalation (4 à 7) d'amortissement vient de moulage avec la pièce (2) de maintien et/ou avec la pièce (3) de fixation.

7. Dispositif de fixation insonorisant pour moteur suivant l'une des revendications 1 à 6 ayant la caractéristique :
i) l'intercalation d'amortissement est constituée de barrettes (4 à 7) d'amortissement, s'étendant de préférence à distance tangentielle mutuelle notamment axialement.

8. Dispositif de fixation insonorisant pour moteur suivant l'une des revendications 1 à 8 ayant la caractéristique :
j) la pièce (2) de maintien et/ou la pièce (3) de fixation est munie de limitation (3.6;3.7) radial en forme de butée, notamment d'une pièce avec elle

9. Dispositif de fixation insonorisant pour moteur suivant au moins revendications 1 à 8 ayant la caractéristique :
k) la pièce (3) de fixation est munie de logements (3.1;3.2) de fixation notamment d'une pièce avec elle, en particulier sous la forme de joints vissés pour une fixation extérieure, notamment à une partie de véhicule automobile.

10. Dispositif de fixation insonorisant pour moteur suivant au moins une des revendications 1 à 6 ayant la caractéristique :
e) la pièce (3) de fixation a la structure d'une grille (3.4;3.5).
